# EUROPEAN PATENT SPECIFICATION

(11) **EP 2 237 277 B1**
(45) Date of publication and mention of the grant of the patent: **29.08.2012**
(21) Application number: 09180028.4
(22) Date of filing: 18.12.2009
(51) Int. Cl.: G11B 17/10

(54) **Handling device**
Handhabungsvorrichtung
Dispositif de manipulation

(30) Priority: 03.04.2009 US 418546
(43) Date of publication of application: 06.10.2010
(73) Proprietor: Datatronics Technology, Inc., Taipei 11471 (TW)
(72) Inventor: Liu, Ming-Hsun, 11471, Taipei (TW); Tsai, Chung-Hsuan, 11471, Taipei (TW)
(74) Representative: Lang, Christian

(56) References cited:
- US-A1- 2002 009 022
- US-A1- 2005 195 701
- US-A1- 2008 288 969
- US-B1- 6 321 649

## Description

### BACKGROUND OF THE INVENTION

### Field of the Invention

The present invention relates to a handling device, and more particularly to a handling device that utilizes a clamping arm to move horizontally and vertically to perform handling operation.

### Description of the Prior Art

In the automatic flow, handling is the most basic operation step and is used most widely. With the development of science and the micromation of technique, handling step is used more and more widely in many fields. For example, in the replication and production of optical discs, a disc handling device is a necessary mechanism for moving between different machines. However, a conventional disc handling device has to use complex connecting rod structure and control system to move discs in the horizontal direction or vertical direction. It is obvious that the more complicated structure of the conventional handling device is, the higher the failure rate becomes, and maintenance fee consequently increases. Therefore a simple structure that can achieve the objective of handling goods is needed to improve the automatic technique.

Hence, many efforts have been made by the author of the application to further improve the existing technology, such as the "power source driven stand-up urinal" disclosed in U.S Pt. No 6129320, which is directed to aids for disabled persons and includes a guide rod on which two cylinders extending along the axial direction of the guide rod are mounted, and each of the cylinders has horizontal slots and a vertically extending gap. A nut provided with a swing arm is screwed on the guide rod, and the swing arm is able to extend out of the horizontal slots. When the vertical gaps of the two cylinders are aligned with each other, the guide rod can drive the swing arm to move within the vertical gaps. When the vertical gaps are misaligned, the guide rod drives the swing arm to move within the horizontal slots of the two cylinders. Such structure is able to drive the swing arm to move vertically or horizontally, so that the disabled person can stand up by placing a hand on the swing arm for support. It is believed to play a certain role if this structure is applied to the handling technology.

After further analysis, however, we found that the displacement of the swing arm in radial direction is still restricted by the horizontal slots of the two cylinders, and the swing arm is consequently unable to rotate 360 degree. Furthermore, the positions of the vertical gaps of the two cylinders cannot be adjusted; hence, the axial displacement of the swing arm is restricted. Such a technology which is restricted both in radial and axial directions is inapplicable to a handling device.

The present invention has arisen to mitigate and/or obviate the afore-described disadvantages.

Document US 6321649 discloses a handling device comprising the features of the preamble of claim 1.

### SUMMARY OF THE INVENTION

The primary objective of the present invention is to provide a handling device that utilizes a clamping arm to be screwed on a guide rod, and a C-shaped housing and a locking mechanism control the clamping arm to move in the horizontal direction and vertical direction for achieving the objective of handling goods.

In order to achieve the abovementioned objectives, the handling device in accordance with the present invention comprises a guide rod, a clamping arm, a C-shaped housing and a locking mechanism. The guide rod is provided on its surface with an outer thread. The axial direction and the rotation direction of the guide rod are vertical to and intersect each other. The axial direction of the guide rod is in the vertical direction, and the rotating direction of the guide rod is in the horizontal direction. The clamping arm is screwed on the guide rod. The C-shaped housing is formed with a longitudinal gap for mounting the clamping arm, and movably clamps the clamping arm in the meantime. The locking mechanism comprises a power source and at least one positioning block which is driven to swing by the power source, each positioning block being used to press against the C-shaped housing to stop it from rotation.

The clamping arm and the C-shaped housing moves in a horizontal direction synchronously along with the rotation of the guide rod under the condition that the horizontal movement of the clamping arm is not restricted, and the clamping arm moves in a vertical direction synchronously along with the rotation of the guide rod under the condition that the positioning block locks and stops the C-shaped housing and the horizontal movement of the clamping arm is restricted, thus handling the goods clamped by the clamping arm.

Furthermore, the positioning block of the locking mechanism can be connected to a driven member, the power source employs a transmission member to drive the driven member which then drives the positioning block to swing. The power source can be a motor, the transmission member can be a worm, and the driven member can be a driven gear which is eccentrically connected with the positioning block.

### BRIEF DESCRIPTION OF THE DRAWINGS

Fig. 1 is a perspective view showing a goods handling device in accordance with a first embodiment of the present invention, wherein the goods handling device has three positioning blocks located in the C-shaped housing;
Fig. 2 is a cross sectional view in accordance with the first embodiment of the present invention showing that the three positioning blocks move away from the C-shaped housing and the clamping arm moves horizontally;
Fig. 3 is a cross sectional view in accordance with the first embodiment of the present invention showing that the three positioning blocks press against the C-shaped housing;
Fig. 4 is an illustrative view in accordance with the first embodiment of the present invention showing that the three positioning blocks press against the C-shaped housing and the clamping arm moves vertically;
Fig. 5 is a perspective view showing a goods handling device in accordance with a second embodiment of the present invention, wherein the goods handling device has two positioning blocks, one of which is located in the C-shaped housing, and the other is located outside the C-shaped housing;
Fig. 6 is a cross sectional view in accordance with the second embodiment of the present invention showing that the two positioning blocks move away from the C-shaped housing and the clamping arm moves horizontally;
Fig. 7 is a cross sectional view in accordance with the second embodiment of the present invention showing that the two positioning blocks press against the C-shaped housing;
Fig. 8 is an illustrative view in accordance with the second embodiment of the present invention showing that the two positioning blocks press against the C-shaped housing and the clamping arm moves vertically.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

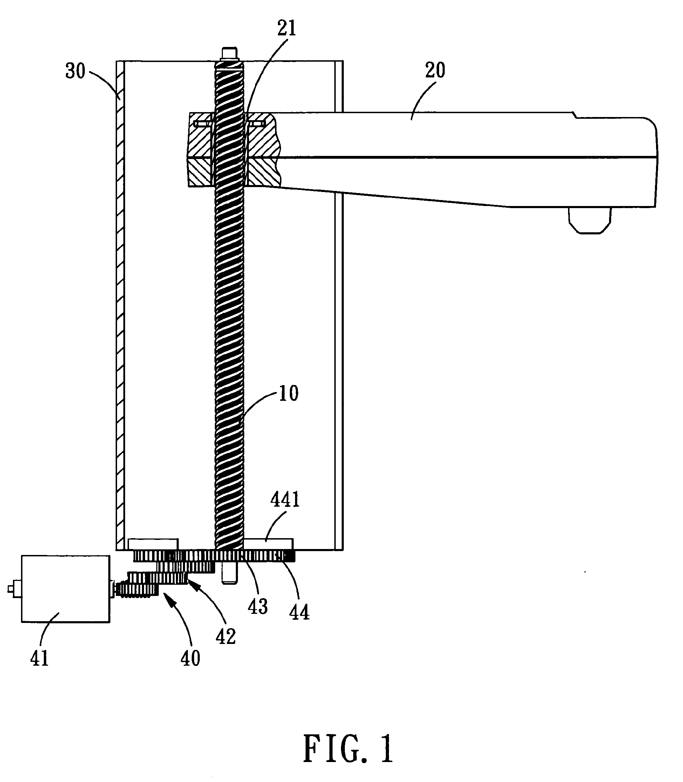

Referring to Figs. 1-4, a handling device in accordance with the present invention comprises a guide rod 10, a clamping arm 20, a C-shaped housing 30, and a locking mechanism 40.

The axial direction of the guide rod 10 is in the vertical direction, and the rotating direction of the guide rod 10 is in the horizontal direction.

The clamping arm 20 is provided with a nut 21 that has an outer side and an inner side. The outer side of the nut 21 is fixed to the clamping arm 20, and the inner side is provided with threads and is directly screwed on the guide rod 10.

The C-shaped housing 30 is tubular-shaped and surrounds the guide rod 10 in the horizontal direction, and the axial length of the C-shaped housing 30 corresponds to the length of the guide rod 10. The C-shaped housing 30 movably clamps the clamping arm 20 in the meantime.

The locking mechanism 40 comprises a power source 41, a plurality of middle gears 42, a main gear 43 and three driven members 44. In this embodiment, the power source 41 is a motor, the shaft 411 of the power source 41 is provided with a transmission member 412 which is a worm. Each of the middle gears 42 includes a big toothed wheel 421 and a small toothed wheel 422 which are concentrically assembled together. The middle gears 42 are connected in such a manner that the big toothed wheel 421 of one middle gear 42 is engaged with the small toothed wheel 422 of another middle gear 42, and a big toothed wheel 421 of one of the middle gears 42 is engaged with the transmission member 412 of the power source 41. The main gear 43 and the guide rod 10 are coaxially and movably disposed. A small toothed wheel 422 of one of the middle gears 42 is engaged with the main gear 43. In this embodiment, the transmission member 412 is engaged with the big toothed wheel 421 of a first middle gear 42, and then the small toothed wheel 422 of this first middle gear 42 is engaged with the big toothed wheel 421 of a second middle gear 42, and the small toothed wheel 422 of this second middle gear 42 is engaged with the big toothed wheel 421 of a third middle gear 42, the middle gears 42 are repeatedly engaged in this way, and finally the small toothed wheel 422 of the last middle gear 42 is engaged with the main gear 43. The three driven members 44 are driven gears which are engaged with the main gear 43, respectively, and meanwhile, each of the driven members 44 is eccentrically connected with a positioning block 441 which is located in the C-shaped housing 30.

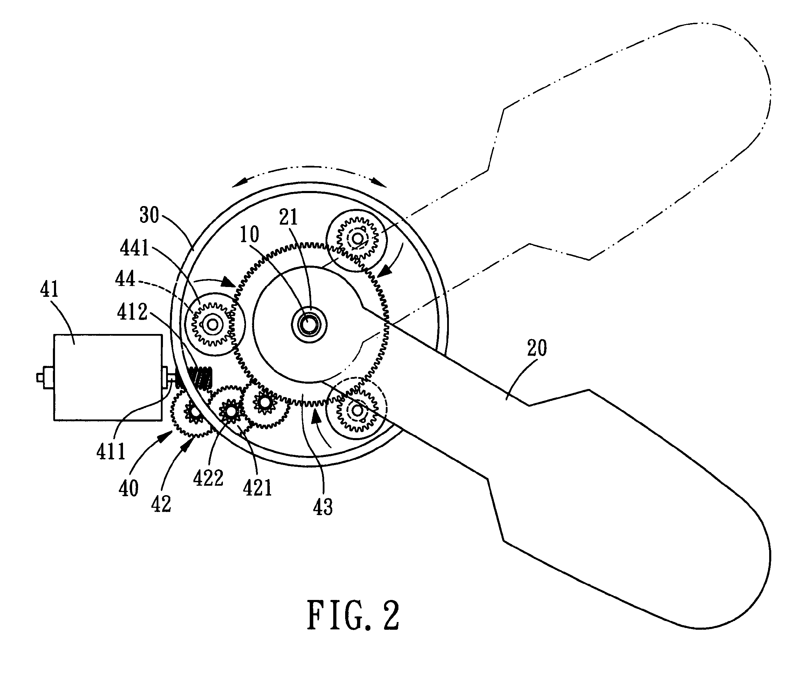

The handling device in accordance with the present invention can achieve an objective of handling goods through the abovementioned structures. As shown in Fig. 2, the locking mechanism 40 employs the power source 41 to rotate the middle gears 42, the main gear 43 and the driven members 44, making the driven members 44 drive the positioning blocks 441 to move away from the C-shaped housing 30. Rotating the guide rod 10 can cause the rotation of the C-shaped housing 30 and horizontal displacement of the clamping arm 20.

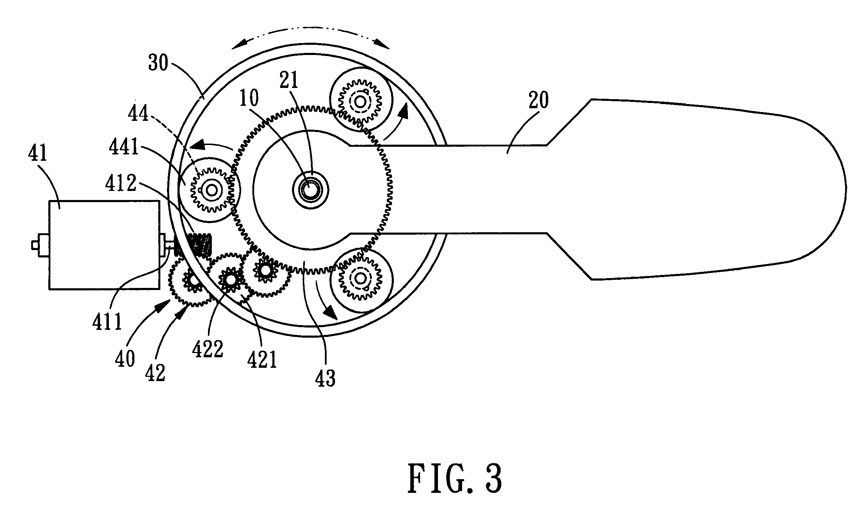

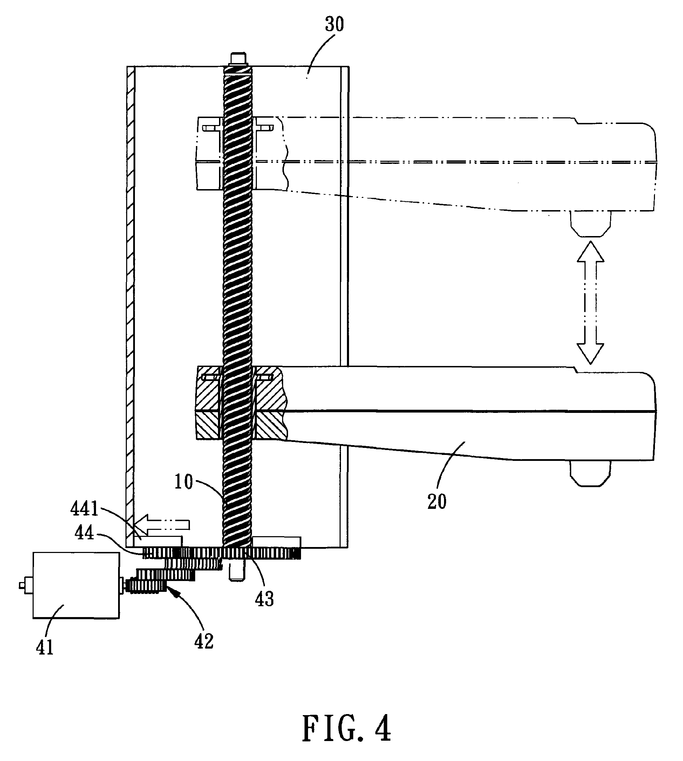

Referring then to Figs. 3 and 4, the power source 41 drives the driven members 44 to rotate, and the driven members 44 drive the positioning blocks 441 to swing outward from the inner side of the C-shaped housing 30. When the positioning blocks 441 press against the C-shaped housing 30, the C-shaped housing 30 cannot rotate and will stop the horizontal movement of the clamping arm 20, so that the clamping arm 20 cannot rotate. Since the movement in the horizontal direction is restricted, the clamping arm 20 will move up and down in the vertical direction along with the rotation of the guide rod.

When the clamping arm 20 carries goods, the goods can be moved to the destination through the horizontal and the vertical movement of the clamping arm 20; and then goods handling operation is finished by releasing the goods.

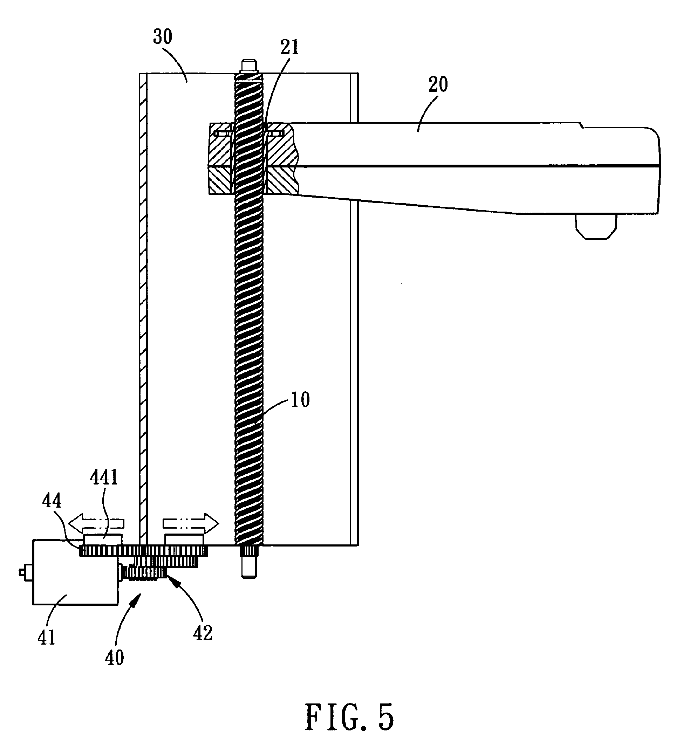

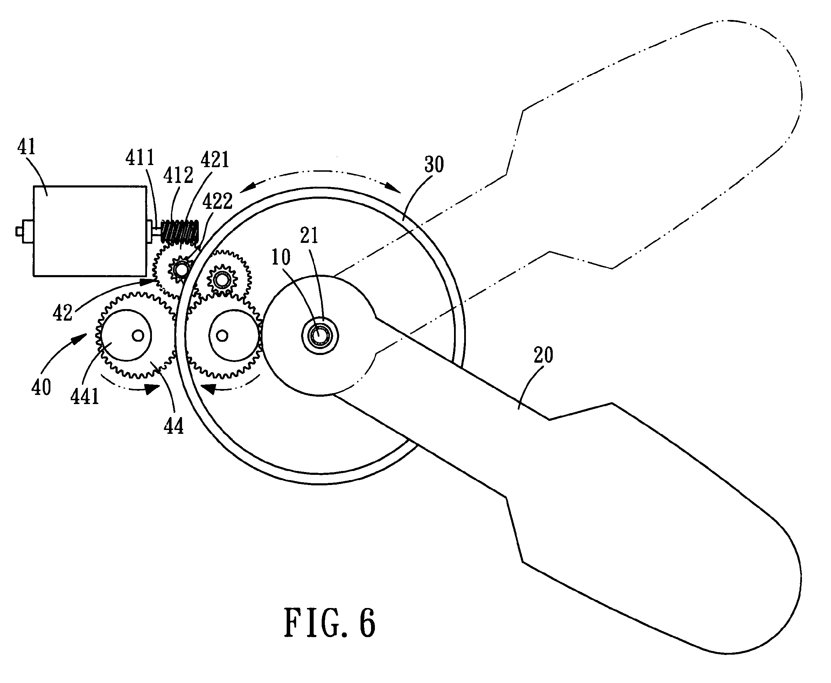

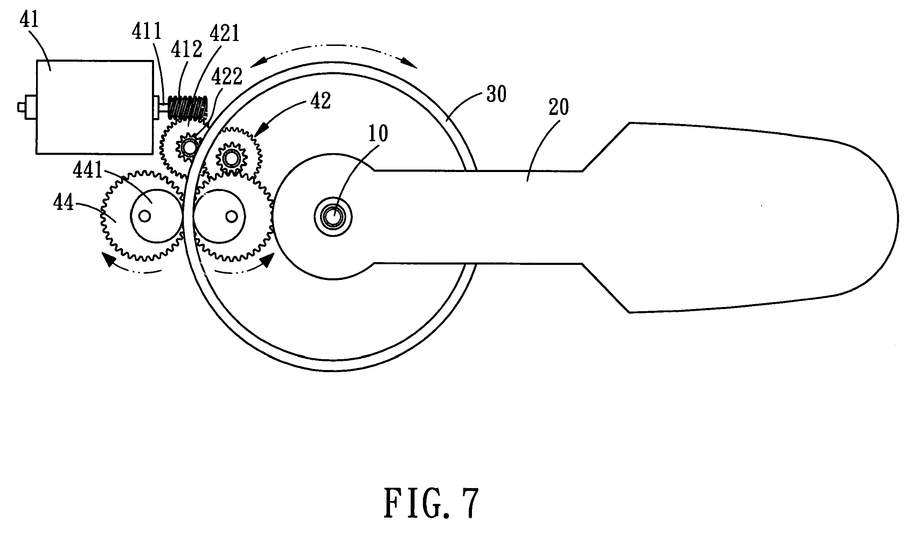

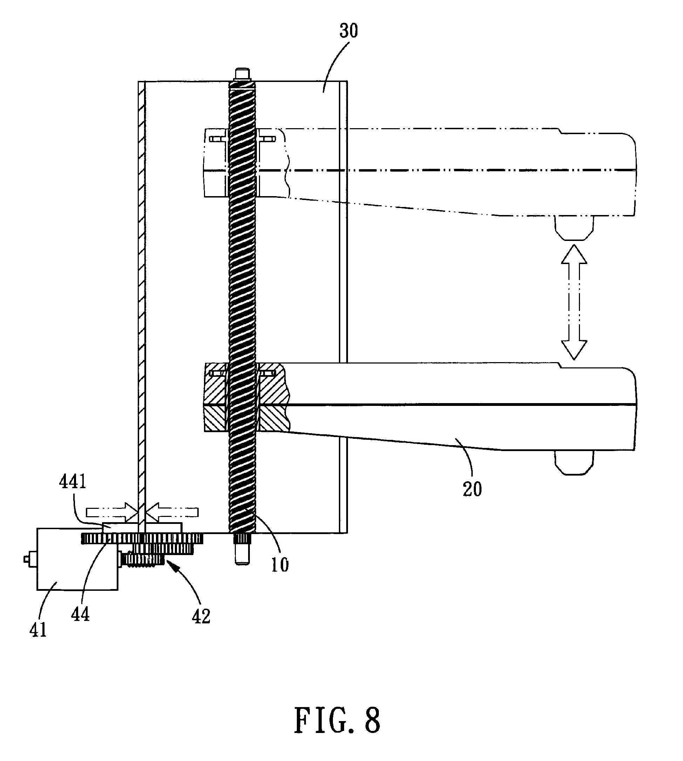

The above embodiment is to stop the rotation of the C-shaped housing 30 by pressing the inner surface of the C-shaped housing 30 with the locking mechanism 40. Besides that, another embodiment of the locking mechanism 40 can also press against the inner and outer surfaces of the C-shaped housing 30 simultaneously to stop the rotation of the C-shaped housing 30, as shown in Figs. 5-8, the locking mechanism 40 comprises a power source 41, a plurality of middle gears 42 and two driven members 44. In this embodiment, the power source 41 is a motor, and the shaft 411 of the power source 41 is provided with a transmission member 412 which is a worm. Each of the middle gears 42 includes a big toothed wheel 421 and a small toothed wheel 422 which are concentrically assembled together. The middle gears 42 are connected in such a manner that the big toothed wheel 421 of one middle gear 42 is engaged with the small toothed wheel 422 of another middle gear 42, and a big toothed wheel 421 of one of the middle gears 42 is engaged with the transmission member 412 of the power source 41. The two driven members 44 are driven gears driven by one of the middle gears 42 to rotate. In this embodiment, the transmission member 412 is engaged with the big toothed wheel 421 of a first middle gear 42, and then the small toothed wheel 422 of this first middle gear 42 is engaged with the big toothed wheel 421 of a second middle gear 42, and the small toothed wheel 422 of this second middle gear 42 is engaged with one of the driven members 44. The two driven members 44 are engaged with each other. Each of the driven members 44 is eccentrically connected with a positioning block 441, one of the positioning blocks 441 is located in the C-shaped housing 30, and the other positioning block 441 is located outside the C-shaped housing 30.

The locking mechanism 40 can employ the power source 41 to rotate the middle gears 42 and the driven members 44, making the driven members 44 drive the positioning blocks 441 to swing away from the C-shaped housing 30, so that the clamping arm 20 is allowed to move horizontally. Or, the power source 41 can drive the positioning blocks 441 to simultaneously clamp against the inner and outer side of the C-shaped housing 30. When the positioning blocks 441 press against the C-shaped housing 30, the C-shaped housing 30 cannot rotate and will stop the horizontal movement of the clamping arm 20, so that the clamping arm 20 cannot rotate. Since the movement in the horizontal direction is restricted, the clamping arm 20 will move up and down in the vertical direction along with the rotation of the guide rod.

While we have shown and described various embodiments in accordance with the present invention, it is clear to those skilled in the art that further embodiments may be made without departing from the scope of the present invention.

## Claims

1. A handling device comprising: a guide rod (10), a clamping arm (20), a C-shaped housing (30) and a locking mechanism (40); wherein:
the guide rod (10) is provided on its outer surface with an outer thread, an axial direction of the guide rod (10) is in the vertical direction, and a rotating direction of the guide rod (10) is in the horizontal direction, the clamping arm (20) is screwed on the guide rod (10), the C-shaped housing (30) surrounds the guide rod (10) and is formed with a longitudinal gap, the handling device is **characterized in that**
the C-shaped housing (30) is able to rotate when driven by the clamping arm (20);
the locking mechanism (40) comprises a power source (41) and at least one positioning block (441) which is operatively connected to the power source and which is used to press against the C-shaped housing (30) to stop it from rotation, wherein the clamping arm (20) and the C-shaped housing (30) swing a horizontal direction synchronously along with the rotation of the guide rod (10) under the condition that the swing movement of the c-shaped housing (30) is not restricted by the positioning block (411), and wherein the clamping arm (20) move in the longitudinal gap of the C-shaped housing (30) along with the rotation of the guide rod (10) under the condition that the positioning block (441) locks and stops the C-shaped housing (30) and the horizontal movement of the clamping arm (20) is restricted.

2. The handling device as claimed in claim 1, wherein the positioning block (441) of the locking mechanism (40) is connected with a driven member (44), the power source (41) employs a transmission member (412) to drive the driven member (44) which then drives the positioning block (441) to swing.

3. The handling device as claimed in claim 2, wherein the power source (41) is a motor, the transmission member (412) is a worm, the driven member (44) is a driven gear which is eccentrically connected with the positioning block (441).

4. The handling device as claimed in claim 1, wherein the clamping arm (20) is provided with a nut (21), and the clamping arm (20) is screwed on the guide rod (10) through the nut (21).

5. The handling device as claimed in claim 2, wherein the locking mechanism (40) comprises the power source (41), the plurality of middle gears (42), a main gear (43) and three positioning blocks (441); the power source (41) is a motor, a shaft (411) of the power source (41) is provided with a transmission member (412) in the form of a worm; each of the middle gears (42) includes a big toothed wheel (421) and a small toothed wheel (422) which are concentrically assembled together; the middle gears (42) are connected in such a manner that the big toothed wheel (421) of one middle gear (42) is engaged with the transmission member (412) of the power source (41); the main gear (43) and the guide rod (10) are coaxially and movably disposed; the small toothed wheel (422) of one of the middle gears (42) is engaged with the main gear (43), the three driven members (44) are driven gears engaged with the main gear (43), respectively; each of the driven members (44) is eccentrically connected with a positioning block (441) which is located in the C-shaped housing (30).

6. The handling device as claimed in claim 5, wherein the transmission member (412) is engaged with the big toothed wheel (421) of a first one of middle gears (42), and then the small toothed wheel (422) of the first one of the middle gears (42) is engaged with the big toothed wheel (421) of a second one of the middle gears (42), and the small toothed wheel (422) of the second one of the middle gears (42) is engaged with the big toothed wheel (421) of a third one of the middle gears (42), the middle gears (42) are repeatedly engaged in this way, and finally the small toothed wheel (422) of a last one of the middle gears (42) is engaged with the main gear (43).

7. The handling device as claimed in claim 2, wherein the locking mechanism (40) comprises the power source (41), the plurality of middle gears (42) and two positioning block (441); the power source (41) is a motor, the shaft (411) of the power source (41) is provided with a transmission member (412) in the form of a worm; each of the middle gears (42) includes a big toothed wheel (421) and a small toothed wheel (422) which are concentrically assembled together; the middle gears (42) are connected in such a manner that the big toothed wheel (421) of one middle gear (42) is engaged with the small toothed wheel (422) of another middle gear (42), and the big toothed wheel (421) of one of the middle gears (42) is engaged with the transmission member (412) of the power source (41); the two driven members (44) are driven gears driven by one of the middle gears (42) to rotate; each of the driven members (44) is eccentrically connected with a positioning block (441); one of the positioning blocks (441) is located in the C-shaped housing (30), and the other positioning block (441) is located outside the C-shaped housing (30).

8. The handling device as claimed in claim 7, wherein the transmission member (412) is engaged with the big toothed wheel (421) of one of the middle gears (42), and then the small toothed wheel (422) of the one of middle gears (42) is engaged with the big toothed wheel (421) of the other one of middle gears (42), and the small toothed wheel (422) of the other one of the middle gears (42) is engaged with one of the driven members (44), the two driven members (44) are engaged with each other.

## Patentansprüche

1. Handhabungsvorrichtung, die umfasst: einen Führungsstab (10), einen Klemmarm (20), ein C-förmiges Gehäuse (30) und einen Feststellmechanismus (40), wobei:
der Führungsstab (10) auf seiner äußeren Oberfläche mit einem Au-βengewinde versehen ist, eine Axialrichtung des Führungsstabs (10) in die vertikale Richtung gerichtet ist und eine Drehrichtung des Führungsstabs (10) in die horizontale Richtung gerichtet ist, der Klemmarm (20) auf dem Führungsstab (10) fest geschraubt ist, das C-förmige Gehäuse (30) den Führungsstab (10) umgibt und mit einer länglichen Lücke ausgebildet ist, und wobei die Handhabungsvorrichtung **dadurch gekennzeichnet ist, dass**
das C-förmige Gehäuse (30) in der Lage ist, sich zu drehen, wenn es durch den Klemmarm (20) angetrieben wird, wobei der Feststellmechanismus (40) eine Energiequelle (41) umfasst und mindestens einen Positionierblock (441), der operativ mit der Energiequelle verbunden ist und der verwendet wird, um gegen das C-förmige Gehäuse (30) zu drücken, um es von der Drehung abzuhalten, wobei der Klemmarm (20) und das C-förmige Gehäuse (30) synchron in einer horizontalen Richtung zusammen mit der Drehung des Führungsstabs (10) unter der Bedingung schwingen, dass die Schwingbewegung des C-förmigen Gehäuses (30) nicht durch den Positionierblock (441) beschränkt wird, wobei der Klemmarm (20) sich in der länglichen Lücke des C-förmigen Gehäuses (30) zusammen mit der Drehung des Führungsstabs (10) unter der Bedingung bewegt, dass der Positionierblock (441) das C-förmige Gehäuse (30) sperrt und dass die horizontale Bewegung des Klemmarms (20) begrenzt ist.

2. Handhabungsvorrichtung nach Anspruch 1, wobei der Positionierblock (441) des Feststellmechanismus (40) mit einem angetriebenen Element (44) verbunden ist, wobei die Energiequelle (41) ein Übertragungselement (412) einsetzt, um das angetriebene Element (44) anzutreiben, welches dann den Positionierblock (441) antreibt, zu schwingen.

3. Handhabungsvorrichtung nach Anspruch 2, wobei die Energiequelle (11) ein Motor ist, wobei das Übertragungselement (412) ein Gewinde ist, wobei das angetriebene Element (44) ein angetriebenes Zahnrad ist, das exzentrisch mit dem Positionierblock (411) verbunden ist.

4. Handhabungsvorrichtung nach Anspruch 1, wobei der Klemmarm (20) mit einer Mutter (21) versehen ist und wobei der Klemmarm (20) durch die Mutter (21) an dem Führungsstab (10) fest geschraubt ist.

5. Handhabungsvorrichtung nach Anspruch 2, wobei der Feststellmechanismus (40) die Energiequelle (41), eine Vielzahl an mittleren Zahnrädern (42), ein Hauptzahnrad (43) und drei Positionierblöcke (441) umfasst, wobei die Energiequelle (41) ein Motor ist, wobei ein Schaft (411) der Energiequelle (41) mit einem Übertragungselement (412) in Form eines Gewindes versehen ist, wobei jedes der mittleren Zahnräder (42) ein großes Zahnrad (421) und ein kleines Zahnrad (422) umfasst, die konzentrisch zusammen angeordnet sind, wobei die mittleren Zahnräder (42) in einer solchen Weise verbunden sind, dass das große Zahnrad (421) von einem mittleren Zahnrad (42) mit dem Übertragungselement (412) der Energiequelle (41) in Eingriff steht, wobei das Hauptzahnrad (43) und der Führungsstab (10) koaxial und beweglich angeordnet sind, wobei das kleine Zahnrad (422) von einem mittleren Zahnrad (42) mit dem Hauptzahnrad (43) in Eingriff steht, wobei die drei angetriebenen Elemente (44) jeweils angetriebene Zahnräder sind, die mit dem Hauptzahnrad (43) in Eingriff stehen, wobei jedes der angetriebenen Elemente (44) exzentrisch mit einem Positionierblock (441) verbunden ist, der in dem C-förmigen Gehäuse (30) angeordnet ist.

6. Handhabungsvorrichtung nach Anspruch 5, wobei das Übertragungselement (412) in Eingriff mit dem großen Zahnrad (421) eines ersten mittleren Zahnrads (42) steht, wobei dann das kleine Zahnrad (422) des ersten mittleren Zahnrads (42) mit den großen Zahnrad (421) eines zweiten mittleren Zahnrads (42) in Eingriff steht, wobei das kleine Zahnrad (422) des zweiten mittleren Zahnrads (42) mit dem großen Zahnrad (421) eines Dritten mittleren Zahnrads (42) in Eingriff steht, wobei die mittleren Zahnräder (42) wiederholt in dieser Art in Eingriff stehen und wobei letztlich das kleine Zahnrad (422) eines letzten mittleren Zahnrads (42) in Eingriff mit dem Hauptzahnrad (43) steht.

7. Handhabungsvorrichtung nach Anspruch 2, wobei der Feststellmechanismus (40) die Energiequelle (41), eine Vielzahl an mittleren Zahnrädern (42) und zwei Positionierblöcke (441) umfasst, wobei die Energiequelle ein Motor ist, wobei ein Schaft (411) der Energiequelle (41) mit einem Übertragungselement (412) in Form eines Gewindes versehen ist, wobei jedes der mittleren Zahnräder (42) ein großes Zahnrad (421) und ein kleines Zahnrad (422) umfasst, die konzentrisch zusammen angeordnet sind, wobei die mittleren Zahnräder (42) in einer solchen Weise verbunden sind, dass das große Zahnrad (421) von einem mittleren Zahnrad (42) in Eingriff mit dem kleinen Zahnrad (422) eines weiteren mittleren Zahnrads (42) steht und dass das große Zahnrad (421) von einem der mittleren Zahnräder (42) in Eingriff mit dem Übertragungselement (412) der Energiequelle (41) steht, wobei die zwei angetriebenen Elemente (44) angetriebene Zahnräder sind, die durch eines der mittleren Zahnräder (42) angetrieben werden, sich zu drehen, wobei jedes der angetriebenen Elemente (44) exzentrisch mit einem Positionierblock (441) verbunden ist, wobei einer der Positionierblöcke (441) in dem C-förmigen Gehäuse (30) angeordnet ist und wobei der andere Positionierblock (441) außerhalb des C-förmigen Gehäuses (30) angeordnet ist.

8. Handhabungsvorrichtung nach Anspruch 7, wobei das 'Übertragungselement (412) in Eingriff mit dem großen Zahnrad (421) von einem der mittleren Zahnrädern (42) steht, wobei dann das kleinen Zahnrad (422) dieses mittleren Zahnrads (42) in Eingriff mit dem großen Zahnrad (421) des anderen mittleren Zahnrads (42) steht, wobei das kleine Zahnrad (422) des anderen mittleren Zahnrads (42) in Eingriff mit einem der angetriebenen Elemente (44) steht, und wobei die zwei angetriebenen Elemente (44) in Eingriff miteinander stehen.

## Revendications

1. Dispositif de manipulation comprenant : une tige de guidage (10), un bras de serrage (20), un bâti en forme de C (30) et un mécanisme de blocage (40) dans lequel la tige de guidage (10) est pourvue sur sa surface extérieure d'un filet extérieur, un sens axial de la tige de guidage (10) est dans le sens vertical et un sens de rotation de la tige de guidage (10) est dans le sens horizontal, le bras de serrage (20) est vissé sur la tige de guidage (10), le bâti en forme de C (30) entoure la tige de guidage (10) et est formé avec une fente longitudinale, le dispositif de manipulation est **caractérisé en ce que** le bâti en forme de C (30) est capable de tourner lorsqu'il est entraîné par le bras de serrage (20) ;
le mécanisme de blocage (40) comprend une source de courant (41) et au moins un bloc de positionnement (441) qui est relié opérationnellement à la source de courant et qui est utilisé pour presser contre le bâti en forme de C (30) pour l'arrêter de tourner, le bras de serrage (20) et le bâti en forme de C (30) oscillant dans un sens horizontal de manière synchrone avec la rotation de la tige de guidage (10) à condition que le mouvement oscillant du bâti en forme de C (30) n'est pas restreint par le bloc de positionnement (441) et le bras de serrage (20) se déplaçant dans la fente longitudinale du bâti en forme de C (30) avec la rotation de la tige de guidage (10) à condition que le bloc de positionnement (441) bloque et arrête le bâti en forme de C (30) et que le mouvement horizontal du bras de serrage (20) est restreint.

2. Dispositif de manipulation selon la revendication 1 dans lequel le bloc de positionnement (441) du mécanisme de blocage (40) est relié à un élément entraîné (44), la source de courant (41) emploie un organe de transmission (412) pour entraîner l'élément entraîné (44) qui entraîne ensuite le bloc de positionnement (441) pour qu'il oscille.

3. Dispositif de manipulation selon la revendication 2 dans lequel la source de courant (41) est un moteur, l'organe de transmission (412) est une vis sans fin, l'élément entraîne (44) est une roue menée qui est reliée excentriquement au bloc de positionnement (441).

4. Dispositif de manipulation selon la revendication 1 dans lequel le bras de serrage (20) est pourvu d'un écrou (21) et le bras de serrage (20) est vissé sur la tige de guidage (10) par l'écrou (21).

5. Dispositif de manipulation selon la revendication 2 dans lequel le mécanisme de blocage (40) comprend la source de courant (41), la pluralité d'engrenages intermédiaires (42), un engrenage principal (43) et trois blocs de positionnement (411) ; la source de courant (41) est un moteur, une tige (411) de la source de courant (41) est pourvue d'un organe de transmission (412) en forme de vis sans fin ; chacun des engrenages intermédiaires (42) comprend une grande roue dentée (421) et une petite roue dentée (422) qui sont assemblées ensemble de manière concentrique ; les engrenages intermédiaires (42) sont reliés de telle manière que la grande roue dentée (421) d'un engrenage intermédiaire (42) est en prise avec l'organe de transmission (412) de la source de courant (41) ; l'engrenage principal (43) et la tige de guidage (10) sont disposées de manière coaxiale et mobile ; la petite roue dentée (422) d'un des engrenages intermédiaires (42) est en prise avec l'engrenage principal (43), les trois éléments entraînés (44) sont des roues menées respectivement en prise avec l'engrenage principal (43) ; chacun des éléments entraînés (44) est relié excentriquement à un bloc de positionnement (441) qui est situé dans le bâti en forme de C (30).

6. Dispositif de manipulation selon la revendication 5 dans lequel l'organe de transmission (412) est en prise avec la grande roue dentée (421) d'un premier engrenage des engrenages intermédiaires (42) et ensuite la petite roue dentée (422) du premier engrenage des engrenages intermédiaires (42) est en prise avec la grande roue dentée (421) d'un second engrenage des engrenages intermédiaires (42) et la petite roue dentée (422) du second engrenage des engrenages intermédiaires (42) est en prise avec la grande roue dentée (421) d'un troisième engrenage des engrenages intermédiaires (42), les engrenages intermédiaires (42) sont en prise de manière répétée de cette manière et finalement la petite roue dentée (422) d'un dernier engrenage des engrenages intermédiaires (42) est en prise avec l'engrenage principal (43).

7. Dispositif de manipulation selon la revendication 2 dans lequel le mécanisme de blocage (40) comprend la source de courant (41), la pluralité d'engrenages intermédiaires (42) et deux blocs de positionnement (441) ; la source de courant (41) est un moteur, la tige (411) de la source de courant (41) est pourvue d'un organe de transmission (412) en forme de vis sans fin ; chacun des engrenages intermédiaires (42) comprend une grande roue dentée (421) et une petite roue dentée (422) qui sont assemblées ensemble de manière concentrique ; les engrenages intermédiaires (42) sont reliés de telle manière que la grande roue dentée (421) d'un engrenage intermédiaire (42) est en prise avec la petite roue dentée (422) d'un autre engrenage intermédiaire (42) et la grande roue dentée (421) d'un des engrenages intermédiaires (42) est en prise avec l'organe de transmission (412) de la source de courant (41) ; les deux éléments entraînés (44) sont des roues menées entraînées à tourner par l'un des engrenages intermédiaires (42) ; chacun des éléments entraînés (44) est relié excentriquement à un bloc de positionnement (441) ; l'un des blocs de positionnement (441) est situé dans le bâti en forme de C (30) et l'autre bloc de positionnement (441) est situé à l'extérieur du bâti en forme de C (30).

8. Dispositif de manipulation selon la revendication 7 dans lequel l'organe de transmission (412) est en prise avec la grande roue dentée (421) d'un des engrenages intermédiaires (42) et ensuite la petite roue dentée (422) de l'un des engrenages intermédiaires (42) est en prise avec la grande roue dentée (421) de l'autre des engrenages intermédiaires (42) et la petite roue dentée (422) de l'autre des engrenages intermédiaires (42) est en prise avec l'un des éléments entraînés, les deux éléments entraînés étant en prise l'un avec l'autre.
